# EUROPÄISCHE PATENTSCHRIFT

(11) **EP 3 666 992 B1**
(45) Veröffentlichungstag und Bekanntmachung des Hinweises auf die Patenterteilung: **19.08.2026**
(21) Anmeldenummer: 19216113.1
(22) Anmeldetag: 13.12.2019
(51) Int. Cl.: E04F 15/18, E04F 15/02

(54) **BODENAUFBAU EINER DUSCHE**
BASE OF A SHOWER
STRUCTURE DE SOL D'UNE DOUCHE

(30) Priorität: 13.12.2018 DE 102018132112
(43) Veröffentlichungstag der Anmeldung: 17.06.2020
(73) Patentinhaber: Richard Brink GmbH & Co. KG, 33758 Schloss Holte-Stukenbrock (DE)
(72) Erfinder: BRINK, Stefan, 33758 Schloß Holte-Stukenbrock (DE); HUSTER, Frank, 72654 Neckartenzlingen (DE); HIPP-HUSTER, Robert, 72654 Neckartenzlingen (DE)
(74) Vertreter: Dantz, Jan Henning

(56) Entgegenhaltungen:
- EP-A2- 1 782 721
- WO-A1-2010/034959
- DE-U1- 202010 003 239
- FR-A1- 2 925 281
- GB-A- 2 463 331
- US-A- 5 371 980
- US-A1- 2018 110 379

## Beschreibung

Die vorliegende Erfindung betrifft einen Bodenaufbau einer Dusche gemäß dem Oberbegriff des Anspruchs 1.

Gattungsgemäße Bodenaufbauten für Duschen sind in zahlreichen Ausführungsvarianten aus dem Stand der Technik bekannt, beispielsweise aus der DE 20 2010 003 239 U1. Die Bodenaufbauten solcher Duschen bestehen üblicherweise aus einem oder mehreren Gefällekeilen bzw. aus einem Estrich sowie einem Ablauf zum Abführen von Duschwasser in eine Entwässerungsleitung.

Insbesondere im Falle von Gefällekeilen, auf denen Fliesen oder Platten verlegt sind, müssen die Fliesen bzw. Platten des Bodens der Dusche stets so verlegt sein, dass sie mit einem Gefälle zum Ablauf hin verlegt sind.

Bekannt ist auch der Einsatz von geschäumten Platten zur Ausformung des benötigten Gefälles oder das Einbringen eines Gefälle-Estrichs, was jedoch mit nicht unerheblichem Aufwand einhergeht.

Bekannt ist auch, Fliesen nur mit Gefälle zu einem rinnenartigen Ablauf hin zu verlegen. Aufgrund der dabei quer zur Gefällerichtung entstehenden Zwickel ist in diesem Fall der Einsatz von Profilsystemen erforderlich, deren Einsatz ebenfalls nur mit erheblichem Aufwand erfolgen kann.

Problematisch ist außerdem die Wasserdichtigkeit des Bodens der Dusche, insbesondere im Übergangsbereich zur Dichtungsebene der Bodenfläche im Raum, in dem die Dusche eingebaut ist sowie im Übergangsbereich zu Dichtungsebenen von anschließenden Wänden, die oftmals ebenfalls gefliest ausgebildet ist.

Um die geforderte Abdichtung zu erreichen, werden in den Übergangsbereichen Dichtbänder und dreidimensionale Dichtecken eingebunden, die an die Dichtungsebenen von Boden und Wänden anschließen. Solche Dichtbänder und Dichtecken müssen auf einer Mindestbreite klebend befestigt werden, wobei die dazu notwendigen Klebeflächen häufig nicht vordefiniert sind.

Die Fugen zwischen Bodenplatten und anschließenden Wandflächen (Fliesen, Natursteine, etc.) werden mit dauerelastischem Fugenmaterial geschlossen.

Derartiges dauerelastisches Fugenmaterial stellt allerdings keine dauerhafte Abdichtung dar, so dass bei Beschädigung einer solchen Fuge stets die Gefahr eines Wassereintritts in den Baukörper hinter und neben dem Bodenaufbau der Dusche besteht.

Bei Erneuerung der dauerelastischen Abdichtung besteht zudem die Gefahr einer Verletzung der Abdichtung. Um dies zu verhindern, wird üblicherweise vor dem Dichtband ein Schnittschutzband verlegt, was den Aufwand zum Einbau des Bodenaufbaus der Dusche weiter erhöht.

Für die Entwässerung der bei Benutzung der Dusche von Wasser beaufschlagten Flächen der Dusche sind sowohl Rinnen als auch zentral angeordnete Abläufe bekannt. Die Reinigung der Rinnen ist, sofern das Wasser auf der gesamten Länge der Rinne unterhalb einer Rinnenabdeckung geführt wird, äußerst aufwändig.

Aus der US 5 371 980 A ist eine Duschwanne mit im Umfangsbereich der Duschwanne verlaufenden umgekanteten Anschlusskanten der Rahmenwände zum Hintergriff einer an den Bodenrahmen anschließenden Wandverkleidung bekannt.

Aufgabe der vorliegenden Erfindung ist es, einen Bodenaufbau einer Dusche bereitzustellen, der eine dauerhafte Abdichtung gewährleistet, mit weniger Montageaufwand einbaubar ist und bei dem Abdichtungsarbeiten in einfacher Weise ermöglicht sind.

Diese Aufgabe wird durch einen Bodenaufbau einer Dusche mit den Merkmalen des Anspruchs 1 gelöst.

Der erfindungsgemäße Bodenaufbau einer Dusche weist wenigstens einen Gefällekeil, einen Ablauf und einen Bodenrahmen auf.

Der Bodenrahmen ist dabei als Wanne mit einem Trägerboden und randseitig nach oben umgekanteten Rahmenwänden ausgebildet.

Dabei sind vom Trägerboden entfernte Anschlusskanten der Rahmenwände zum Hintergriff einer an den Bodenrahmen zumindest teilumfänglich anschließenden Wandverkleidung oder zum Untergriff eines an den Bodenrahmen zumindest teilumfänglich anschließenden Fußbodenbelags umgekantet.

Die Anschlusskante einer Rahmenwand zum Untergriff eines an den Bodenrahmen anschließenden Abdichtung sowie eines Fußbodenbelags und seiner Bettung erstreckt sich parallel zum Trägerboden versetzt nach außen.

Mit einem solchen Bodenaufbau einer Dusche ist eine wasserdichte Abdichtung insbesondere in den kritischen Übergangsbereichen der Dusche zur Wandverkleidung bzw. zum Fußbodenbelag ermöglicht. Sämtliches Wasser wird dadurch in den wannenförmigen Bodenaufbau geleitet und von dort über den Ablauf in die Abflussleitung.

Vorteilhafte Ausführungsvarianten der Erfindung sind Gegenstand der Unteransprüche.

Gemäß einer vorteilhaften Ausführungsvariante sind die Seitenränder der Rahmenwände in Eckbereichen des Bodenrahmens stoffschlüssig miteinander verbunden, insbesondere miteinander verschweißt. Eine stoffschlüssige Verbindung dieser Seitenränder ermöglicht eine dauerhaft wasserdichte Verbindung der Seitenränder miteinander.

Darüber hinaus ermöglicht dies eine einfache Fertigung des Bodenrahmens aus einem Metallblech, das lediglich an den Ecken eingeschnitten werden muss. Danach werden die erhaltenen Bereiche umgekantet und anschließend miteinander verschweißt, um den wannenartigen Bodenrahmen zu schaffen.

Gemäß einer weiteren vorteilhaften Ausführungsvariante erstreckt sich die Anschlusskante einer Rahmenwand zum Hintergriff einer an den Bodenrahmen anschließenden Wandverkleidung vertikal zum Trägerboden.

Diese Anschlusskante erstreckt sich dabei im eingebauten Zustand bis hinter die Abdichtung und bspw. einen den als Wandverkleidung dienenden Fliesenspiegel, so dass von der Wand ablaufendes Wasser in den als Wanne ausgebildeten Bodenrahmen abläuft und nicht in einen Bereich zwischen dem Boden der Dusche und der Wand.

Dabei ist die Höhe der Anschlusskante bevorzugt zur Aufnahme eines Dichtbandes definiert.

Gemäß einer bevorzugten Ausführungsvariante ist die Rahmenwand zum Hintergriff einer an den Bodenrahmen anschließenden Wandverkleidung stufig geformt, wobei die Anschlusskante parallel zu einem an den Trägerboden anschließenden Teilbereich der Rahmenwand nach außen versetzt ist.

Dabei ist die Breite der Anschlusskante bevorzugt zur Aufnahme eines Dichtbandes definiert.

Ein an den Trägerboden senkrecht anschließender Teilbereich der Rahmenwand ist nach einer weiteren Ausführungsvariante zur Anschlusskante hin u-förmig umgebogen. Durch die u-förmige Umbiegung der Rahmenwand wird eine wasserdichte Abgrenzung der Dusche zum Fußbodenbelag geschaffen. Eine daran anschließende nochmalige Umkantung schafft die Verbindung zum Fußbodenbelag und seiner Bettung.

Gemäß einer weiteren Ausführungsvariante ist eine dem Trägerboden abgewandte Oberseite des wenigstens einen Gefällekeils zum Ablauf hin mit Gefälle geformt.

Dies ermöglicht das Aufbringen eines Bodenbelags wie insbesondere Fliesen auf wenigstens einen Gefällekeil, ohne beim Verlegen der Fliesen separat ein Gefälle anformen zu müssen. Darüber hinaus sind durch den Bodenrahmen bedingt keine Abdichtungsarbeiten zur Verhinderung eines Wasserdurchtritts in Bereiche außerhalb des Duschbodens notwendig.

Gemäß einer Ausführungsvariante führt der Gefällekeil zu einer in den Ablauf mündenden Ausnehmung, die beispielsweise mit einer Abdeckung in Gestalt eines Schlitzes oder einer Bohrung. versehen ist.

Gemäß einer weiteren Ausführungsvariante weist der Gefällekeil eine Ausnehmung auf, in der eine Rinne aufgenommen ist.

Ist der Gefällekeil mit Gefälle in einer Richtung ausgebildet, kann die Rinne dadurch angrenzend an eine Wand angeordnet sein.

Nach einer alternativen Ausführungsvariante liegen zwei Gefällekeile in dem Bodenrahmen ein, zwischen denen die Rinne des Ablaufs aufgenommen ist.

Auch dies ermöglicht, eine solche Rinne und den Ablauf in einem zentralen Bereich des Bodens anzuordnen. Die Gefällekeile sind dabei jeweils mit Gefälle zur Rinne hin ausgerichtet.

Denkbar ist es, zwei gleich große Gefällekeile vorzusehen.

Gemäß einer alternativen Ausführungsvariante sind die beiden Gefällekeile verschieden groß ausgebildet, so dass unterschiedliche Positionierungen der Rinne bzw. des Ablaufs ermöglicht sind.

Um auch stehendes Wasser in der Rinne zu verhindern, weist die Rinne wenigstens einen Gefällekeil auf, deren vom Trägerboden abgewandte Oberfläche zu einer Ablaufkammer der Rinne hin geneigt ist.

Nach einer bevorzugten Ausführungsvariante sind in der Rinne zwei solche Gefällekeile aufgenommen, was eine Positionierung der Ablaufkammer der Rinne an unterschiedlichen Positionen der Rinne ermöglicht.

Die Ablaufkammer der Rinne ist dabei gemäß einer weiteren bevorzugten Ausführungsvariante mit einem Sieb und durch eine mit einer Ablauföffnung versehene Ablaufabdeckung abgedeckt.

Gemäß einer weiteren Ausführungsvariante ist unterhalb des Trägerbodens ein Aufbauelement mit einer Ausnehmung zur Aufnahme eines Geruchverschlusses und eines an den Geruchverschluss angeschlossenen Rohrstücks angeordnet. Dies ermöglicht einen einfachen Anschluss an ein Abflussrohr sowie eine Dichtigkeitsprüfung des Ablaufs von der Außenseite.

Gemäß einer weiteren Ausführungsvariante weist der Trägerboden einen auf seiner dem Aufbauelement zugewandten Unterseite stoffschlüssig angebrachten Stutzen auf, auf den der Geruchverschluss aufsteckbar ist.

Gemäß einer weiteren alternativen Ausführungsvariante weist der Ablauf wenigstens eine Rinne mit wenigstens einer zu einer Ablaufkammer des Ablaufs hin geneigten Ablauffläche auf. Die Ablauffläche bildet bei dieser Ausführungsvariante bereits die Sichtfläche des Ablaufs, die bündig oder geringfügig unterhalb der Ebene des umliegenden Bodenbelags des Duschbodens liegt.

Die Rinne weist bevorzugt zwei zu einer sich in Richtung der Längserstreckung des Ablaufs erstreckenden Falte geneigte Ablaufflächen auf. Dadurch wird erreicht, dass es auch im Bereich der Rinnen nicht zu einer Pfützenbildung kommen kann und so sämtliches Wasser zügig in Richtung der Ablaufkammer des Ablaufs fließt.

Nachfolgend werden bevorzugte Ausführungsbeispiele anhand der beiliegenden Zeichnungen näher erläutert. Es zeigen:
- Fig. 1 bis 6: isometrische Ansichten von bodeneben einbaubaren Ausführungsvarianten eines Bodenaufbaus einer Dusche aus unterschiedlichen Perspektiven,
- Fig. 7 und 8: isometrische Ansichten einer aufsetzbaren Ausführungsvariante Bodenrahmens einer Dusche aus unterschiedlichen Perspektiven,
- Fig. 9: eine isometrische Explosionsdarstellung des in den Fig. 3 und 4 gezeigten Ausführungsbeispiels des Bodens ohne eingesetzte Gefällekeile,
- Fig. 10: eine isometrische Explosionsdarstellung des in den Fig. 1 und 2 gezeigten Ausführungsbeispiels des Bodenrahmens mit Gefällekeilen,
- Fig. 11 bis 14: isometrische Detaildarstellungen der Eckbereiche der bodeneben einbaubaren Ausführungsvariante des Bodenrahmens,
- Fig. 15 und: 16 isometrische Detaildarstellungen der Eckbereiche der aufsetzbaren Ausführungsvariante des Bodenrahmens,
- Fig. 17: eine isometrische Ansicht des in Fig. 3 gezeigten Ausführungsbeispiels des Bodenrahmens mit daran angeordneten Dichtbändern,
- Fig. 18 und: 19 den Figuren 13 und 14 entsprechende isometrische Detaildarstellungen der Eckbereiche der bodeneben einbaubaren Ausführungsvariante des Bodenrahmens mit gelochten Anschlusskanten,
- Fig. 20: eine Draufsicht auf die in den Fig. 1 und 3 gezeigte Ausführungsvariante des Bodens,
- Fig. 21: eine Schnittansicht des in Fig. 20 gezeigten Bodens entlang einer in Fig. 20 gezeigten Schnittlinie XXI - XXI,
- Fig. 22: eine Schnittansicht des in Fig. 20 gezeigten Bodens entlang einer in Fig. 20 gezeigten Schnittlinie XXII - XXII,
- Fig. 23 und 24: eine isometrische Darstellung einer Ausführungsvariante eines Bodens einer Dusche ohne Darstellung der Gefällekeile mit alternativ ausgeführter Rinne mit und ohne Ablaufabdeckung,
- Fig. 25: eine isometrische Darstellung der Ausführungsvariante eines Bodens einer Dusche gemäß Figur 23 mit auf den Gefällekeilen aufgebrachten Platten,
- Fig. 26: eine isometrische Darstellung der Ausführungsvariante eines Bodens einer Dusche gemäß Figur 2 mit auf den Gefällekeilen aufgebrachten Platten,
- Fig. 27: eine isometrische Darstellung der Ausführungsvariante eines Bodens einer Dusche gemäß Figur 2 mit auf den Gefällekeilen aufgebrachten tiefer im Bodenrahmen einliegenden Platten,
- Fig. 28 und 29: isometrische Ansichten einer bodeneben einbaubaren weiteren Ausführungsvariante eines Bodenaufbaus einer Dusche aus unterschiedlichen Perspektiven,
- Fig. 30: eine isometrische Explosionsdarstellung des in den Fig. 28 und 29 gezeigten Ausführungsbeispiels des Bodens ohne eingesetzte Gefällekeile,
- Fig. 31: eine Schnittansicht des in Fig. 28 gezeigten Bodens entlang des Ablaufs, und
- Fig. 32: eine Schnittansicht des in Fig. 28 gezeigten Bodens senkrecht zum Ablauf.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bodens, des Gefällekeils, des Ablaufs, des Bodenrahmens und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

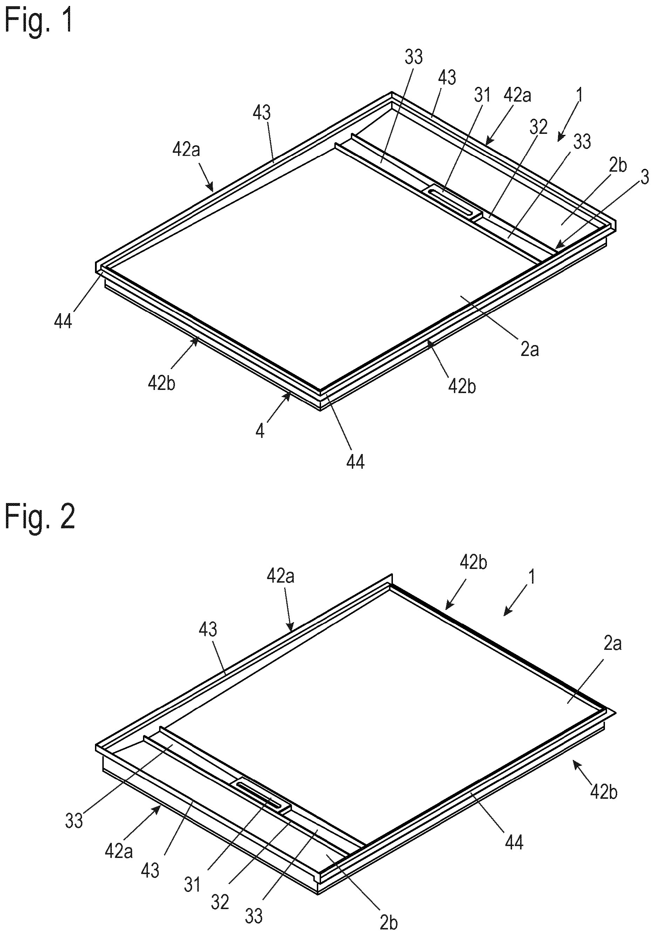

In den Fig. 1 bis 8 ist mit dem Bezugszeichen 1 insgesamt eine Ausführungsvariante eines erfindungsgemäßen Bodenaufbaus einer Dusche bezeichnet. Der Bodenaufbau 1 weist wenigstens einen Gefällekeil 2, 2a, 2b, einen mehrteiligen Ablauf 3 und einen Bodenrahmen 4 auf, der in den gezeigten Ausführungsbeispielen den wenigstens einen Gefällekeil 2, 2a, 2b aufnimmt.

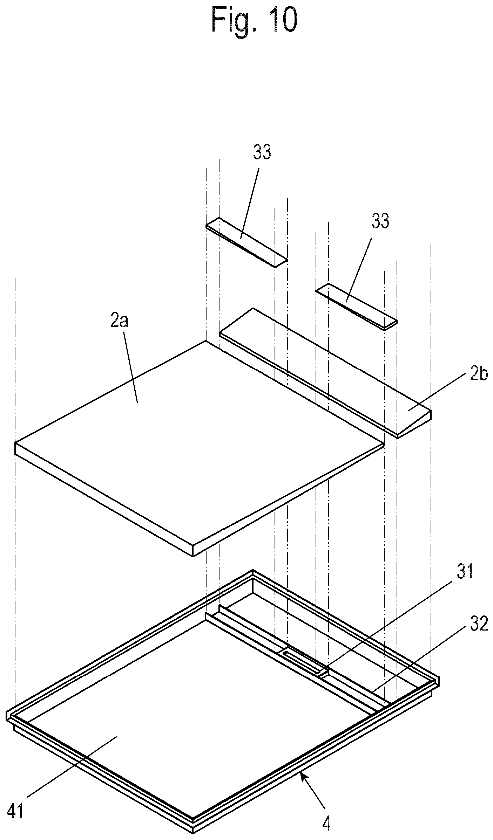

Bei den in den Figuren 1 bis 4, 7 und 8 gezeigten Ausführungsvarianten weist der Bodenaufbau 1 zwei solcher Gefällekeile 2a, 2b auf, die mit Gefälle zum Ablauf 3 hin in den Bodenrahmen 4 eingelegt sind. Eine beispielhafte Explosionsdarstellung der in den Figuren 1 und 2 gezeigten Ausführungsvariante ist in Figur 10 gezeigt. Die beiden Gefällekeile 2a, 2b sind in der hier gezeigten Ausführungsvariante durch die Position des Ablaufs 3 bedingt verschieden groß ausgebildet. Denkbar sind auch gleich große Gefällekeile 2a, 2b, insbesondere bei mittig in der Wanne angeordnetem Ablauf 3.

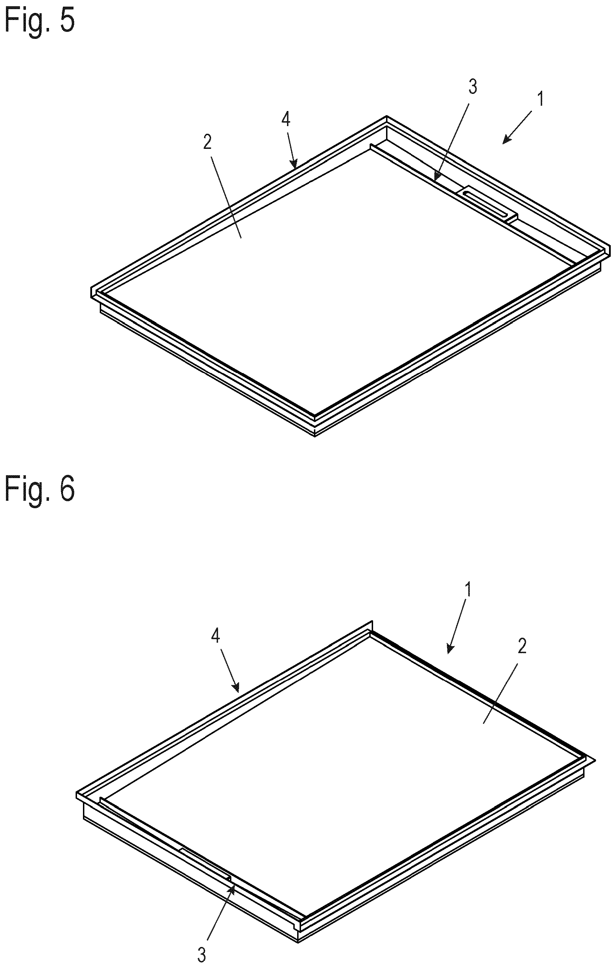

Bei der in den Figuren 5 und 6 gezeigten Ausführungsvariante weist der Bodenaufbau 1 einen einzigen Gefällekeil 2 auf, der mit Gefälle zum hier randseitig im Bodenrahmen 4 angeordneten Ablauf 3 hin in den Bodenrahmen 4 eingelegt ist.

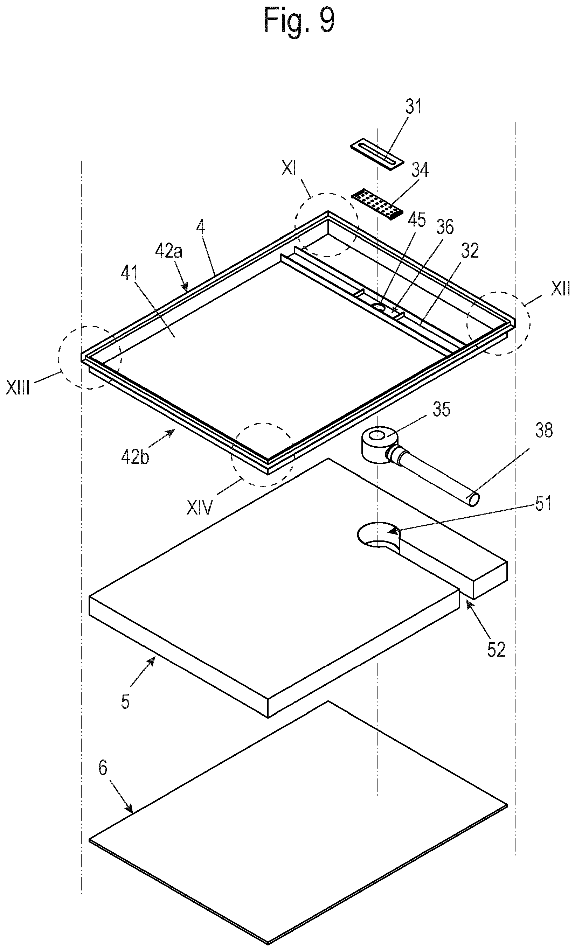

Der Bodenrahmen 4 ist, wie beispielsweise in Fig. 9 gezeigt ist, als Wanne mit einem Trägerboden 41 und randseitig umgekanteten Rahmenwänden 42a, 42b ausgebildet.

Die Rahmenwände 42a, 42b sind dabei einstückig mit dem Trägerboden 41 ausgebildet. Bei einem aus einem Metallblech bestehenden Bodenrahmen 4 sind die Rahmenwände 42a, 42b relativ zum üblicherweise horizontal liegenden Trägerboden 41 nach oben umgebogen und bilden so eine Wanne.

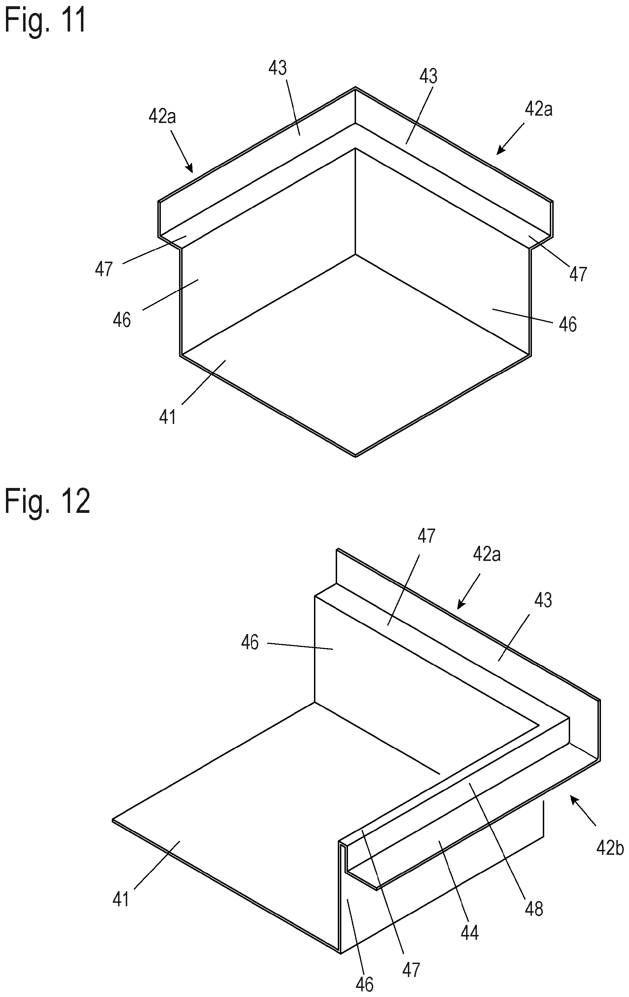

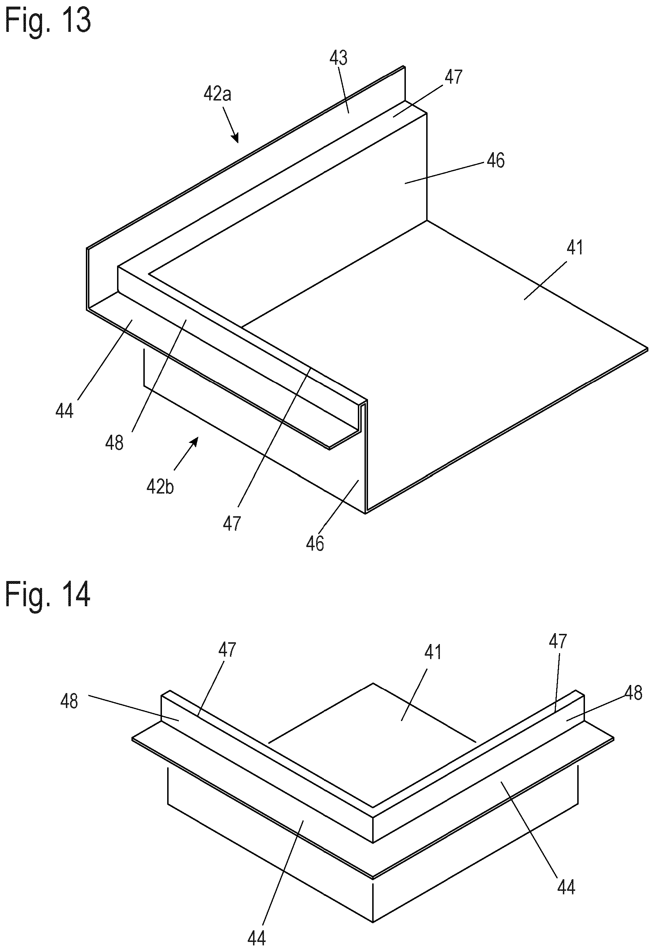

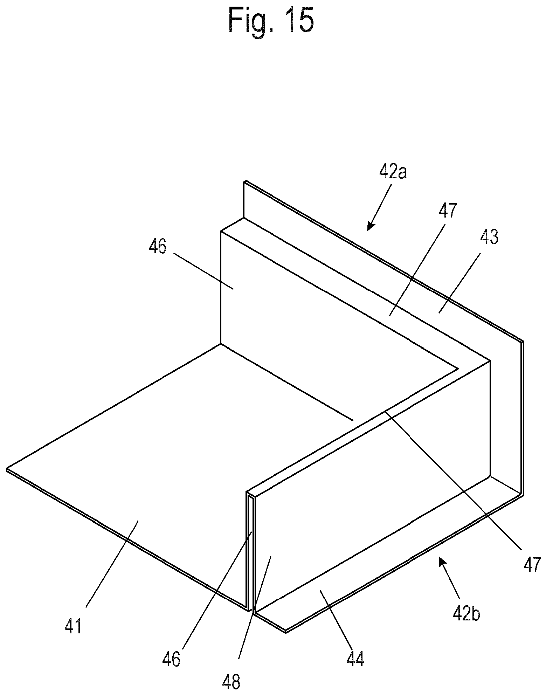

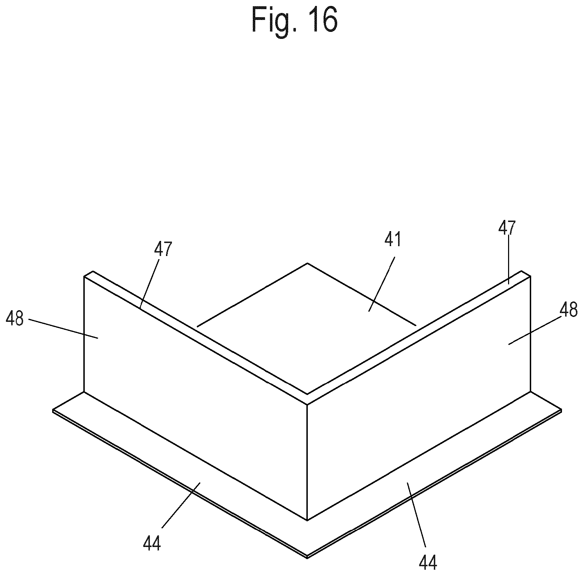

Die vom Trägerboden 41 entfernten Anschlusskanten 43, 44 der Rahmenwände 42a, 42b sind, wie insbesondere in den in den Fig. 11 bis 16 gezeigten Detaildarstellungen zu erkennen ist, zum Hintergriff hinter eine an den Bodenrahmen 4 zumindest teilumfänglich anschließenden Wandverkleidung oder zum Untergriff eines an den Bodenrahmen 4 zumindest teilumfänglich anschließenden Fußbodenbelags und der entsprechenden Abdichtungsebenen umgekantet.

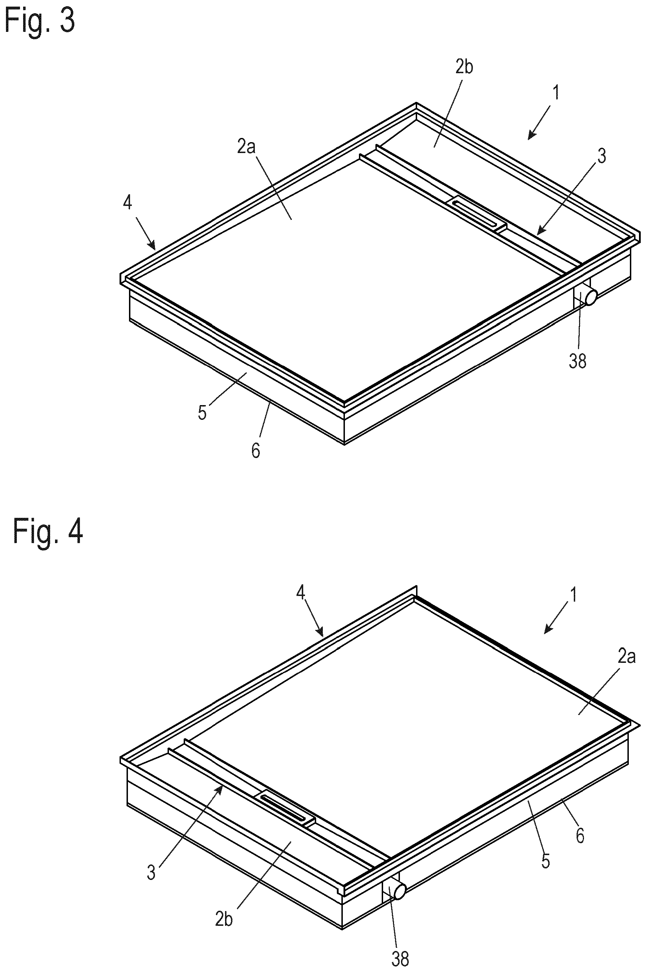

So sind dementsprechend die beiden Anschlusskanten 43 des in Fig. 4 gezeigten Ausführungsbeispiels zum Hintergriff einer an den Bodenrahmen 4 anschließenden Wandverkleidung so umgebogen, dass sie sich vertikal zum Trägerboden 41 erstrecken.

Nach dem Einbau des Bodenaufbaus 1 sind diese Anschlusskanten 43 mit ihrer Außenfläche der Wandfläche der angrenzenden Wand zugewandt.

Ein Platten- oder Fliesenspiegel, der später an der Wand der Dusche angebracht wird, überdeckt dabei diese Anschlusskanten 43, so dass von der Wandverkleidung ablaufendes Wasser nicht in den Bereich hinter dem Bodenaufbau 1, sondern in den Bereich des als Wanne ausgebildeten Bodenrahmens 4 abläuft.

Die Rahmenwand 42a ist hier bevorzugt zum Hintergriff einer an den Bodenrahmen 4 anschließenden Wandverkleidung stufig geformt, wobei die Anschlusskante 43 parallel zu einem an den Trägerboden 41 anschließenden Teilbereich 46 der Rahmenwand 42a nach außen versetzt ist.

Je nach Dicke des Fliesen- oder Plattenspiegels oder alternativer Wandverkleidung kann die Breite dieser Stufe 47 dabei in einfacher Weise bei der Fertigung des Bodenrahmens 4 angepasst werden.

Denkbar ist auch, die Rahmenwand 42a zum Hintergriff einer an den Bodenrahmen 4 anschließenden Wandverkleidung geradlinig, d.h. ohne eine solche Stufe auszubilden.

Wie in den Fig. 11 bis 14 des Weiteren gezeigt ist, erstreckt sich die die Anschlusskante 44 einer Rahmenwand 42b zum Untergriff eines an den Bodenrahmen 4 anschließenden Fußbodenbelags parallel zum Trägerboden 41 versetzt nach außen. Je nach Dicke des Fußbodenbelags ist eine Anpassung der relativen Höhe, in der die Anschlusskante 44 sich nach außen erstreckt, in einfacher Weise möglich.

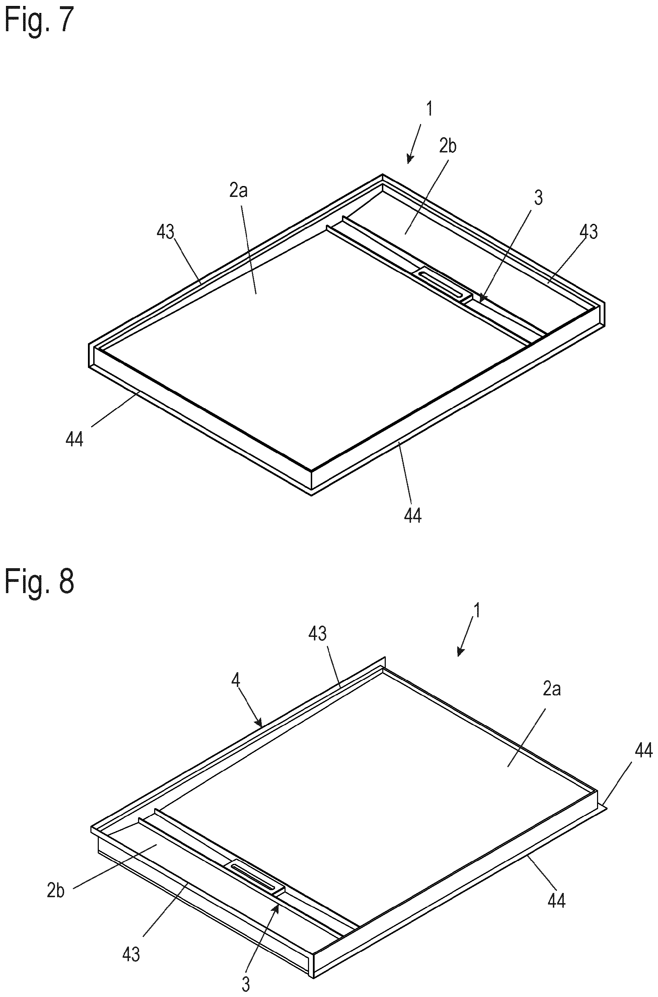

Bei der in den Fig. 7, 8, 15 und 16 gezeigten Ausführungsvariante eines nichtbodeneben, sondern über den Raumboden nach oben herausstehenden, aufgesetzten Dusche erstreckt sich die die Anschlusskante 44 einer Rahmenwand 42b zum Untergriff eines an den Bodenrahmen 4 anschließenden Fußbodenbelags auf gleicher Höhe wie der Trägerboden 41 nach außen.

Dabei ist bevorzugt ein an den Trägerboden 41 senkrecht anschließender Teilbereich 46 der Rahmenwand 42b zur Anschlusskante 44 hin u-förmig umgebogen, so dass hier der sich an den Trägerboden 41 anschließende Teilbereich 46 der Rahmenwand 42 als Begrenzung der Wanne dient und über eine sich an den Teilbereich 46 anschließende horizontal verlaufende obere Sichtkante 47 ein bevorzugt sich senkrecht nach unten erstreckendes Außenwandstück 48 anschließt, von welchem sich dann die Anschlusskante 44 auf Höhe des Trägerbodens 41 nach außen erstreckt.

Die Anschlusskanten 44 dient dem vereinfachten Anschluss an eine Abdichtungsebene eines Fußbodenbelages des Raumes, in dem die Dusche eingebaut ist.

Neben der hier gezeigten Darstellung des Bodenrahmens 4 mit zwei Rahmenwänden 42a zum Anschluss an eine Wandverkleidung und zwei Rahmenwänden 42b zum Anschluss an einen Fußbodenbelag, der zum Einbau des Bodens 1 in einer Raumecke des Raumes geeignet ist, ist es auch denkbar, beispielsweise nur eine solche Anschlusskante 43 zum Hintergriff einer an den Bodenrahmen 4 anschließenden Wandverkleidung und drei Rahmenwände 42b mit Anschlusskanten 44 zum Anschluss an den Fußbodenbelag auszubilden, wobei der Bodenaufbau 1 in diesem Fall geeignet ist zum Einbau an einer Wand des Raumes, entfernt von einer Raumecke.

Denkbar wäre auch, den Bodenrahmen 4 mit vier Anschlusskanten 44 zum Anschluss an den Fußbodenbelag auszubilden, so dass der Bodenaufbau 1 mit einem solchermaßen ausgebildeten Bodenrahmen 4 auch für den Einbau beabstandet von Wänden des Raumes, beispielsweise in der Raummitte, geeignet ist.

Denkbar wäre ebenfalls, den Bodenrahmen 4 mit nur einer Anschlusskante 44 zum Anschluss an den Fußbodenbelag und drei Rahmenwänden 42a zum Anschluss an eine Wandverkleidung auszubilden, so dass der Bodenaufbau 1 mit einem solchermaßen ausgebildeten Bodenrahmen 4 auch für den Einbau in einer Nische des Raumes geeignet ist.

Die vertikal (in Richtung z) oder annähernd vertikal ausgerichteten Seitenränder der Rahmenwände 42a, 42b in den Eckbereichen des Bodenrahmens 4 sind bevorzugt stoffschlüssig miteinander verbunden, insbesondere miteinander verschweißt. Sie gewährleisten damit eine dauerhafte Wasserdichtigkeit des Bodenrahmens 4, insbesondere durch den Anschluss von weiter unten näher erläuterter Dichtbänder 7 und ohne Verwendung sonst üblicher dreidimensional geformter Dichtecken.

Um im Bereich des Bodenaufbaus 1 stehendes Wasser zu verhindern, ist eine dem Trägerboden 41 abgewandte Oberseite des wenigstens einen Gefällekeils 2, 2a, 2b zum Ablauf 3 hin mit Gefälle geformt.

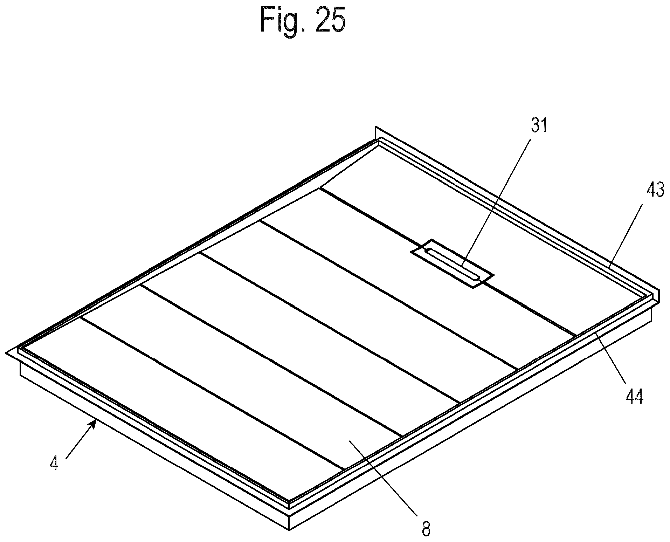

Dazu sind bei dem Ausführungsbeispiel gemäß den Figuren 1 bis 6 die beiden Gefällekeile 2a, 2b derart innerhalb des als Wanne ausgebildeten Bodenrahmens 4 eingelegt, dass die Gefällekeile 2a, 2b zum Ablauf 3 hin abfallen und damit auf die Gefällekeile 2a, 2b oder auf diesen angeordnete Fliesen oder Platten 8, wie beispielhaft in den Figuren 25 bis 27 gezeigt, auftreffendes Wasser zum Ablauf 3 hin abfließen wird.

Wie in den Figuren 9, 21 und 22 dargestellt ist, weist der Ablauf 3 desweiteren einen Geruchverschluss 35 und einen sich in Richtung eines unterhalb des Trägerboden 41 angeordneten Aufbauelement 5 hin erstreckenden Ablaufstutzen 37 auf, auf den der Geruchverschluss 35 aufsteckbar ist. Der Ablaufstutzen 37 ist bevorzugt stoffschlüssig am Trägerboden 41 angebracht.

Das Aufbauelement 5 weist einen entsprechende Ausschnitt 51 zur Aufnahme des Geruchverschlusses 35 auf sowie einen Schlitz 52 zur Aufnahme eines Rohrstücks 38 zum Anschluss an ein Abwasserrohr. Das Rohrstück 38 erstreckt sich dabei bevorzugt bis an einen Seitenrand des Aufbauelements 5 oder, wie in den Figuren 3 und 4 dargestellt, über den Seitenrand des Aufbauelements 5 hinaus.

Der Ablaufstutzen 37 durchtritt eine Ablauföffnung 45 im Trägerboden 41 des Bodenrahmens 4.

Die Rinne 32 besteht bevorzugt aus zwei parallel zueinander angeordneten Trennstegen, zwischen die ein weiterer oder mehrere Gefällekeile 33 einlegbar sind, dessen bzw. deren vom Trägerboden 41 abgewandte Oberfläche zur Ablaufkammer 36 bzw. zur Ablaufabdeckung 31 des Trägerbodens 41 hin geneigt ist.

Denkbar ist auch, die Rinne als im Querschnitt u-förmiges Profil mit im Boden vorgesehener Ablauföffnung auszubilden, in das der Gefällekeil 33 oder die Gefällekeile 33 einlegbar sind.

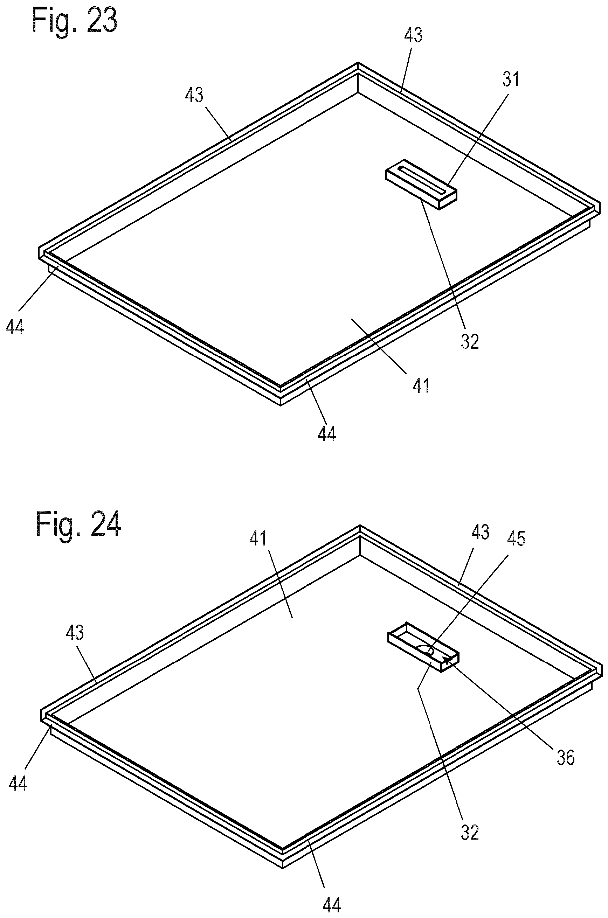

Die Rinne 32 weist bei den in den Figuren 1 bis 10 gezeigten Ausführungsbeispielen eine der Breite (in Richtung x) des Trägerbodens 41 entsprechende Länge auf. Bei den in den Figuren 23 bis 25 gezeigten Ausführungsbeispielen ist die Rinne deutlich kürzer ausgebildet.

Oberhalb der Ablauföffnung 45 des Trägerbodens 41 ist ein Sieb eingelegt, das in einer Ablaufkammern 36 innerhalb der Rinne 32 fixiert ist. Nach oben ist das Sieb 34 durch eine Ablaufabdeckung 31 abgedeckt. Denkbar ist auch der Einsatz einer Rinne 32 mit geringerer Breite.

Wie in den Figuren 1 bis 8 und 10 des Weiteren gezeigt ist, sind in der Rinne 32 zwei Gefällekeile 33 aufgenommen.

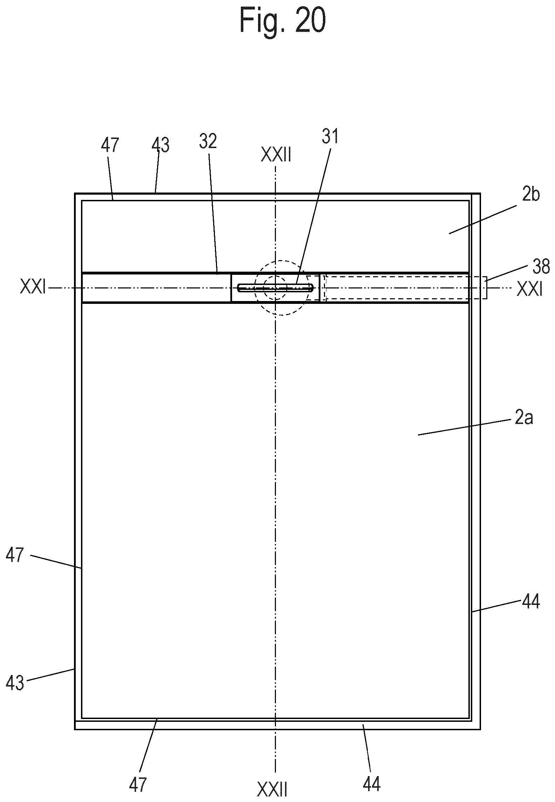

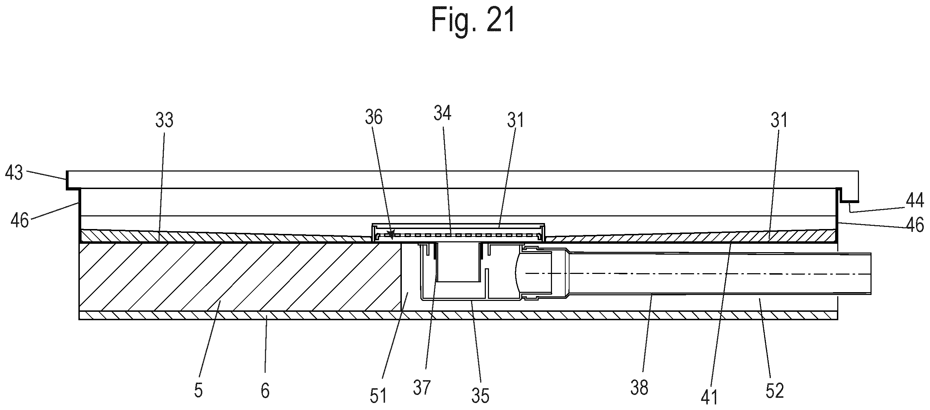

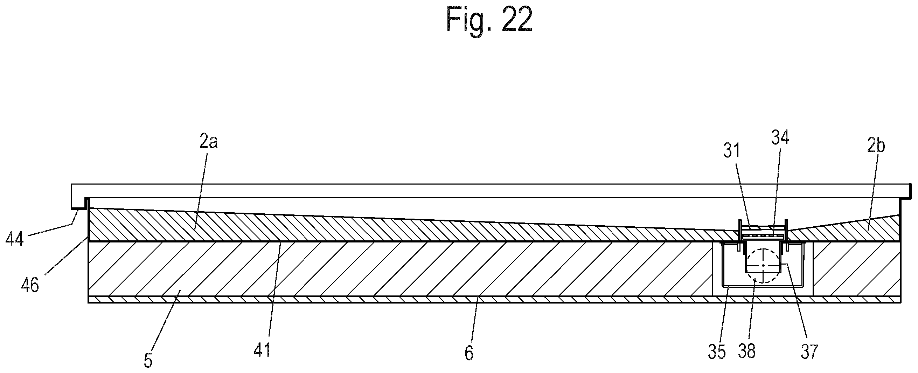

Dies ermöglicht, dass das Duschwasser der Neigung der Gefällekeile 2a, 2b folgend zunächst in Richtung der Rinne 32 gelenkt wird (wie beispielhaft in Figur 22 gezeigt ist) und dann über die Gefällekeile 33 zur hier zentral in der Rinne 32 angeordneten Ablaufkammer 36 hin abfließen kann, wie beispielhaft in Figur 21 gezeigt ist. Figur 20 zeigt die Schnittlinien der in den Figuren 21 und 22 dargestellten Schnittansichten.

Wie in Fig. 3, 4 und 9 des Weiteren gezeigt ist, ist unterhalb des Aufbauelements 5 bevorzugt eine Schallschutzplatte 6 angeordnet, die an dem Bodenrahmen 4 befestigbar ist und so als komplette Baueinheit vor Ort in dem Raum, in dem die Dusche eingebaut werden soll, verbaut werden kann. Denkbar ist auch, eine solche Schallschutzplatte 6 direkt an der Unterseite des Bodenrahmens 4 anzubringen, sofern der Bodenaufbau 1 kein Aufbauelement 5 benötigt.

Wie in den Figuren Fig. 25 bis 27 gezeigt ist, sind auf den Gefällekeilen 2a, 2b, 33 Platten 8 oder Fliesen aufgesetzt, die die Sichtfläche der Dusche bilden. Diese Platten 8 oder Fliesen können in einfacher Weise auf die Gefällekeile 2a, 2b aufgelegt und verklebt werden. Denkbar sind aber auch andere auf den Gefällekeilen aufbringbare Bodenmaterialien.

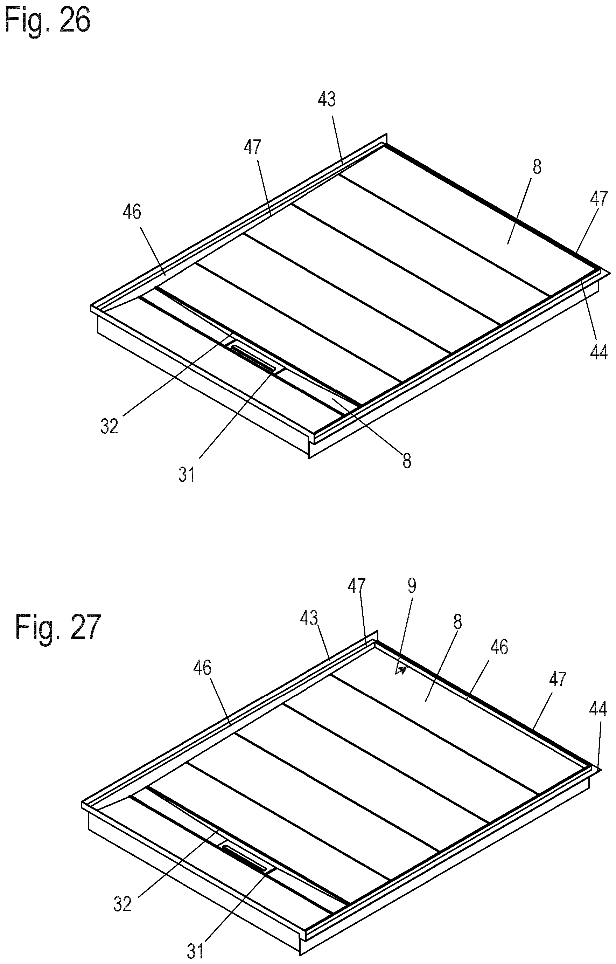

Während die Platten 8 bei der in Figur 26 gezeigten Ausführungsvariante einen stufenlosen Übergang zu den angrenzenden Platten des Fußbodens bilden, liegen die Platten 8 bei der in Figur 27 gezeigten Ausführungsvariante unter Ausbildung einer sogenannten Schwallkante 9 etwas tiefer im Bodenrahmen 4 ein. Die Tiefe des Bodenrahmens 4 kann dazu durch Variation der Höhe des Teilbereichs 46 des Bodenrahmen 4 in einfacher Weise an die gewünschte Verlegeart und Plattendicke angepasst werden.

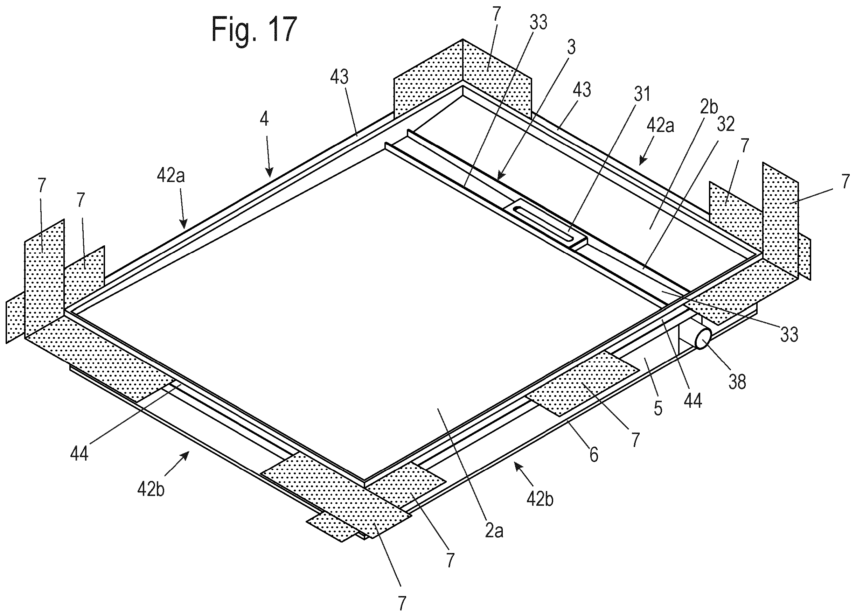

Zur Abdichtung des Bodenrahmens 4 zu der oder den Wänden bzw. dem Boden des Raumes, in dem die Dusche eingebaut werden soll, sind, wie in Figur 17 dargestellt ist, bevorzugt Dichtbänder 7 an den Anschlusskanten 43, 44 der Rahmenwände 42a, 42b angeordnet. Die Dichtbänder 7 sind dabei bevorzugt mit den Anschlusskanten 43, 44 der Rahmenwände 42a, 42b verklebt. Die Dichtbänder 7 ragen dabei zur Anbindung an die Wandverkleidung bzw. zum Fußbodenbelag und seiner Bettung über die Fläche der Anschlusskanten 43, 44 hinaus, wobei die Breite der Anschlusskanten 43, 44 (senkrecht zu ihrer Längserstreckung) so bemessen ist, dass eine hinreichende Klebefläche zur Verfügung steht.

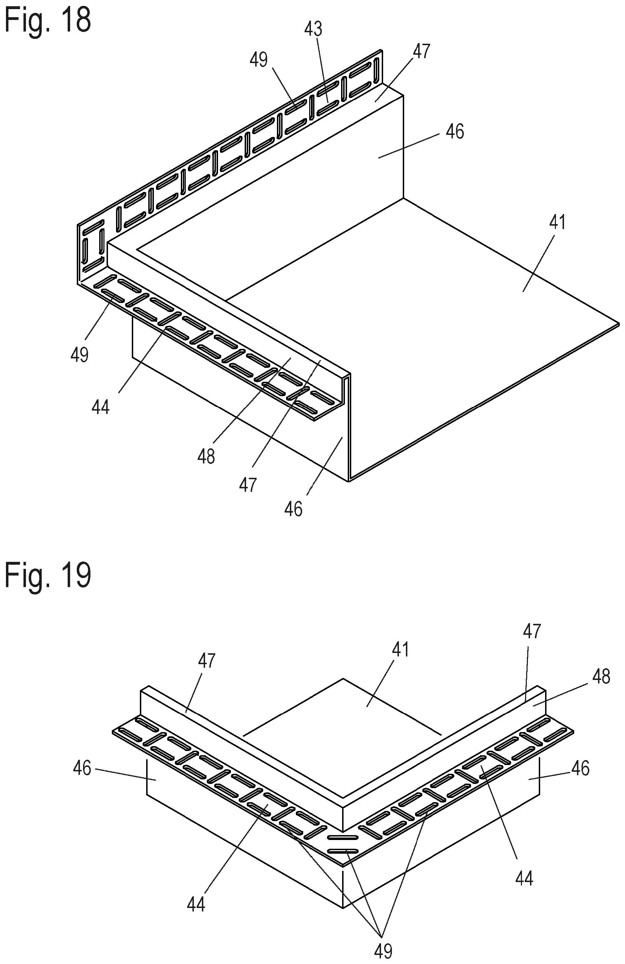

Für eine bessere Verankerung in der Bettung von Platten oder Fliesen sind die Anschlusskanten 43, 44 der Rahmenwände 42a, 42b gemäß einer in den Figuren 18 und 19 gezeigten Ausführungsvariante gelocht ausgebildet. Die Löcher 49 in den Anschlusskanten 43, 44 sind in der hier gezeigten Ausführungsvariante als Langlöcher ausgebildet, denkbar sind jedoch auch andere Formgestaltungen der Löcher 49. Denkbar ist auch, nur Teilstücke der Anschlusskanten 43, 44 gelocht auszubilden.

Die Anschlusskanten 43 und 44 der Rahmenwände 42a und 42b dienen darüber hinaus als Schnittschutz zur Verhinderung einer Beschädigung eines hinter der dauerelastischen Ausfugung liegenden Dichtbandes.

Diese dauerelastische Fuge liegt oberhalb eines Bereiches, in dem stehendes Wasser vorkommen könnte, so dass selbst bei beschädigter oder nicht vorhandener Dichtfuge das Wasser stets in den Bodenrahmen 4 fließt.

Die Gefällekeile 2a, 2b und 33 bestehen bevorzugt aus den Platten aus extrudiertem Polystyrolschaum. Denkbar sind auch andere Materialien für die Gefällekeile 2a, 2b und 33.

Denkbar ist auch, den wenigstens einen Gefällekeil 2, 2a, 2b unterhalb des Bodenrahmens 4 anzuordnen. In diesem Fall ist der Trägerboden 41 derart geformt, dass er der Formgestalt der Gefällekeile 2a, 2b folgt und so eine flächige Auflage bzw. Abstützung des Bodenrahmens 4 gewährleistet ist.

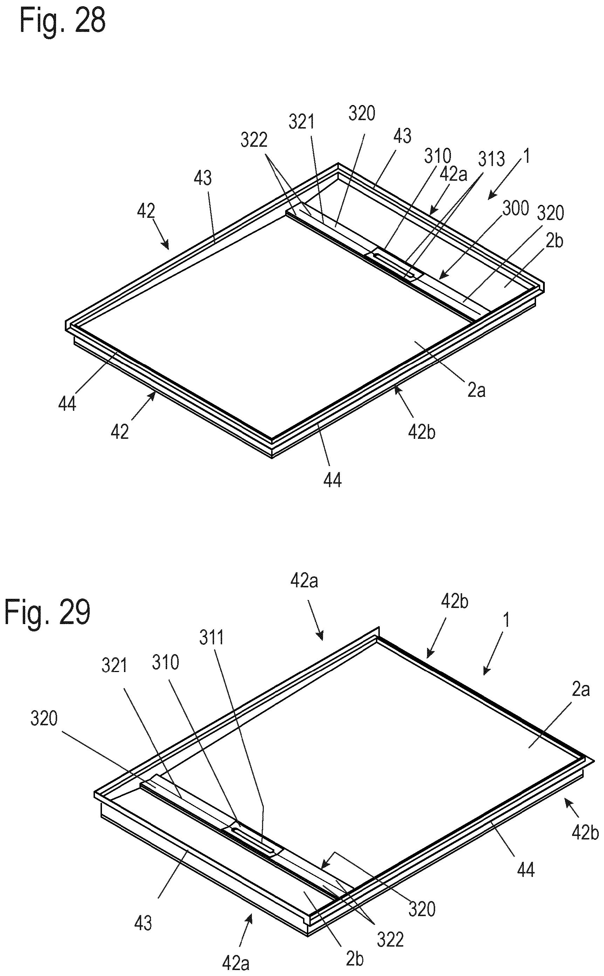

In den Figuren 28 bis 32 ist eine weitere alternative Ausführungsvariante eines erfindungsgemäßen Bodenaufbaus einer Dusche gezeigt.

Im Unterschied zu der in den Figuren 1 bis 8 gezeigten Ausführungsvariante ist der Ablauf 300 nicht mit Gefällekeilen 33 ausgebildet, sondern als mit einer an die Fliesenlage auf den Gefällekeilen 2a, 2b anschließendes Rinnenbauteil ausgebildet.

Dieses Rinnenbauteil weist, wie in den Figuren 28 bis 30 dargestellt ist, ebenfalls eine Ablaufabdeckung 310 mit einem Schlitz 311 auf, das in der hier gezeigten Ausführungsvariante zentral zwischen zwei sich in Längsrichtung des Ablaufs 300 erstreckenden Rinnen 320 angeordnet ist.

Die Rinnen 320 sind gemäß einer in Figur 28 gezeigten Ausführungsvariante in Längsrichtung zur Ablaufabdeckung 310 hin leicht geneigt ausgebildet. In einer in Figur 29 gezeigten alternativen Ausführungsvariante sind die Rinnen 320 in Längsrichtung eben und lediglich senkrecht zur Längsrichtung zur Falte 321 hin geneigt ausgebildet.

Während die Falten 321 sich in der in Figur 29 gezeigten Ausführungsvariante bevorzugt über die gesamte Länge der Rinnen 320 erstrecken, erstrecken sich die Falten 321 bei der in Figur 28 gezeigten Ausführungsvariante bevorzugt nur über eine Teillänge der Rinnen 320 bis an den der Ablaufabdeckung 310 nahen Rand.

Des Weiteren sind Ablaufflächen 322 der Rinne 320 zu einer in Längsrichtung der Rinne 320 verlaufenden Falte 321 hin mit einem leichten Gefälle geneigt ausgebildet, so dass von Platten oder Fliesen, die auf den Gefällekeilen 2a, 2b aufgebracht sind, in Richtung des Ablaufs 300 abfließendes Wasser in Richtung der Ablaufabdeckung 310 und von dieser in den Schlitz 311 geführt wird.

Auch die Ablaufabdeckung 310 kann in gleicher Weise wie die Rinnen 320 mit ausgebildeten Ablaufflächen 313 mit Gefälle ausgebildet sein, die zu einer Falte 312 hin geneigt sind, wobei die Falte 312 sich in Verlängerung des Schlitzes erstreckt.

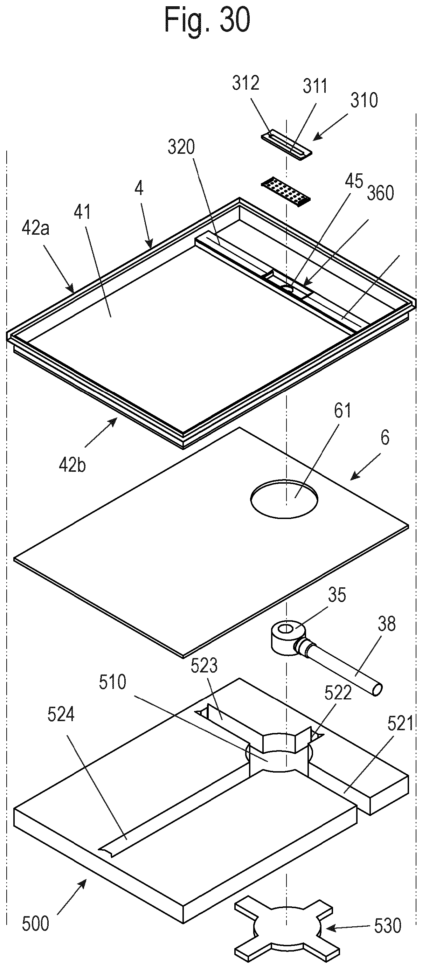

Wie des Weiteren in den Figuren 30, 31 und 32 gezeigt ist, ist bei dieser Ausführungsvariante die Schallschutzplatte 6 zwischen einer Unterseite des Trägerbodens 41 des als Wanne ausgebildeten Bodenrahmens 4 und dem Aufbauelement 500 angeordnet.

Dementsprechend weist die Schallschutzplatte 6 hier einen Durchlass 61 auf, durch den abfließendes Wasser aus der Ablaufkammer 360 weiter in den Geruchverschluss 35 und das an diesen angeschlossene Rohrstück 38 fließen kann.

Das Aufbauelement 500 weist im Gegensatz zu der in Figur 9 gezeigten Ausführungsvariante des Aufbauelements 5 mehrere Schlitze 521, 522, 523, 524 auf, in die das Rohrstück 38 einlegbar ist.

Dadurch ist eine einfache Anpassung beim Einbau des Rohrstücks 38 an die Position des Abwasserrohrs ermöglicht, an das das Rohrstück angeschlossen werden muss. Je nach angedachter Ablaufrichtung können die im gezeigten Ausführungsbeispiel zum Rand hin verschlossenen Schlitze 522 bis 524 im Bereich des Randes des Aufbauelements 500 noch durchgebrochen werden, wie es anhand des Schlitzes 521 dargestellt ist, so dass beim Einbau des Ablaufs vor Ort das Aufbauelement 500 die Möglichkeit bietet, das Rohrstück 38 zu jedem Rand des Aufbauelements 500 hin auszurichten.

Das Aufbauelement 500 weist ebenfalls einen Ausschnitt 510 zur Aufnahme des Geruchverschlusses 35 auf. Das beim Ausschneiden des Ausschnitts 510 entstehende Ausschnittelement 530 dient dabei bevorzugt zur Lagesicherung des Geruchverschlusses 35 und kann dementsprechend unter dem Geruchverschluss 35 in den Ausschnitt 510 eingelegt werden.

Die Dicke dieses Ausschnittselements 30 ist dazu entsprechend so angepasst, dass ein Absetzen des Geruchverschlusses 35 nach unten über ein geringes Spiel hinaus verhindert ist.

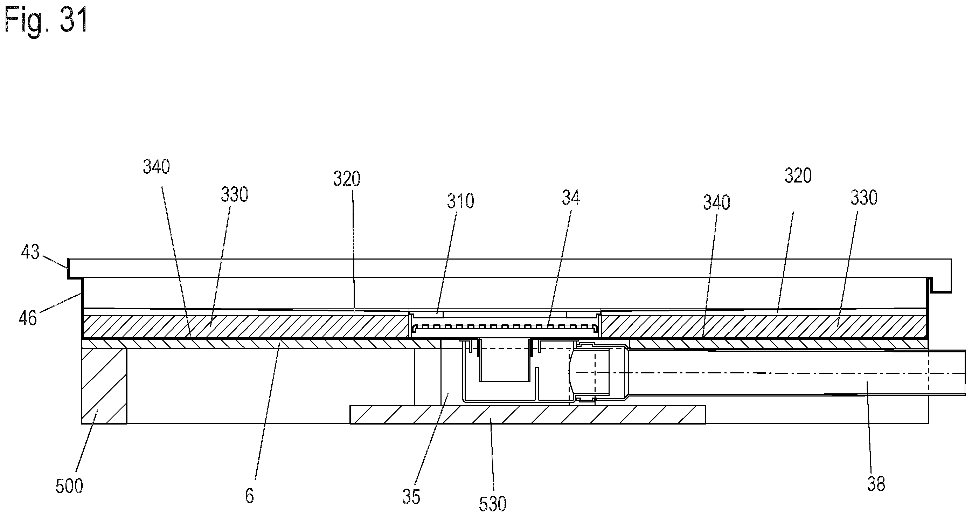

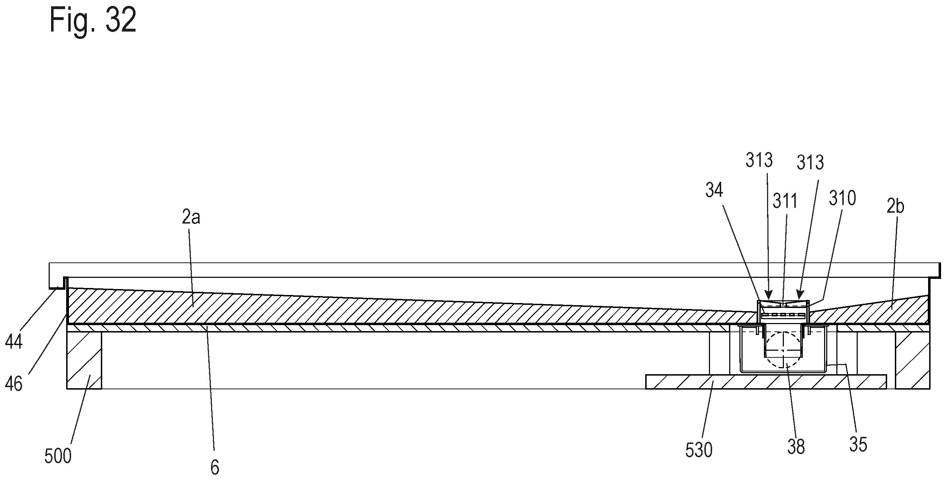

Die Figuren 31 und 32 zeigen nochmals den Aufbau des Bodenaufbaus 1 in jeweiligen Schnittansichten, analog zu den Figuren 21 und 22.

Der Boden 340 der Rinnen 320 liegt vollflächig auf dem Boden 41 des als Wanne ausgebildeten Bodenrahmens 4 auf.

Der Innenraum der Rinnen 320 ist bevorzugt mit einer Füllung 330 gefüllt. Als Füllung 330 kommt dabei insbesondere Polymerbeton in Frage. Denkbar sind auch andere Füllmaterialien.

Die Rinne 320 und die Ablaufabdeckung 310 sind bevorzugt aus einem Edelstahl gefertigt. Denkbar sind auch hier andere Materialien. Denkbar ist auch, die Rinne mehrteilig mit einer beispielsweise aus Edelstahl gefertigten Abdeckung, enthaltend die Ablauffläche 322, und einer aus einem anderen Material, beispielsweise einem formstabilen Kunststoff, enthaltend den Boden 340, auszubilden.

### Bezugszeichenliste

- 1: Bodenaufbau

- 2, 2a, 2b: Gefällekeil

- 3: Ablauf
- 31: Ablaufabdeckung
- 32: Rinne
- 33: Gefällekeil
- 34: Sieb
- 35: Geruchverschluss
- 36: Ablaufkammer
- 37: Ablaufstutzen
- 38: Rohrstück

- 4: Bodenrahmen
- 41: Trägerboden
- 42a, b: Rahmenwand
- 43: Anschlusskante
- 44: Anschlusskante
- 45: Ablauföffnung
- 46: Teilbereich
- 47: Sichtkante
- 47a: Schwallkante
- 48: Außenwandstück
- 49: Loch

- 5: Aufbauelement
- 51: Ausschnitt
- 52: Schlitz

- 6: Schallschutzplatte

- 7: Dichtband
- 8: Platte
- 9: Schwallkante

- 300: Ablauf
- 310: Ablaufabdeckung
- 311: Schlitz
- 312: Falte
- 313: Ablauffläche
- 320: Rinne
- 321: Falte
- 322: Ablauffläche
- 330: Füllung
- 340: Boden
- 360: Ablaufkammer

- 500: Aufbauelement
- 510: Ausschnitt
- 521: Schlitz
- 522: Schlitz
- 523: Schlitz
- 524: Schlitz
- 530: Ausschnittelement

- x: Richtung
- y: Richtung
- z: Richtung

- h: Höhe

## Patentansprüche

1. Bodenaufbau (1) einer Dusche, aufweisend einen Ablauf (3, 300) und einen Bodenrahmen (4), wobei der Bodenrahmen (4) als Wanne mit einem Trägerboden (41) und randseitig nach oben umgekanteten Rahmenwänden (42a, 42b) ausgebildet ist, wobei vom Trägerboden (41) entfernte und diesen umlaufend umgebende Anschlusskanten (43, 44) der Rahmenwände (42a, 42b) zum Hintergriff einer an den Bodenrahmen (4) zumindest teilumfänglich anschließenden Wandverkleidung oder zum Untergriff eines an den Bodenrahmen (4) zumindest teilumfänglich anschließenden Fußbodenbelags umgekantet sind, **dadurch gekennzeichnet, dass** der Bodenaufbau wenigstens einen Gefällekeil (2, 2a, 2b) aufweist und dass die Anschlusskante (44) einer Rahmenwand (42b) zum Untergriff eines an den Bodenrahmen (4) anschließenden Fußbodenbelags sich parallel zum Trägerboden (41) versetzt nach außen erstreckt.

2. Bodenaufbau (1) nach Anspruch 1, **dadurch gekennzeichnet, dass** Seitenränder der Rahmenwände (42a, 42b) in Eckbereichen des Bodenrahmens (4) stoffschlüssig miteinander verbunden, insbesondere miteinander verschweißt sind.

3. Bodenaufbau (1) nach Anspruch 1 oder 2, **dadurch gekennzeichnet, dass** die Anschlusskante (43) einer Rahmenwand (42a) zum Hintergriff einer an den Bodenrahmen (4) anschließenden Wandverkleidung sich vertikal zum Trägerboden (41) erstreckt.

4. Bodenaufbau (1) nach Anspruch 3, **dadurch gekennzeichnet, dass** die Rahmenwand (42a) zum Hintergriff einer an den Bodenrahmen (4) anschließenden Wandverkleidung stufig geformt ist, wobei die Anschlusskante (43) parallel zu einem an den Trägerboden (41) anschließenden Teilbereich (46) der Rahmenwand (42a) nach außen versetzt ist.

5. Bodenaufbau (1) nach Anspruch 3 oder 4, **dadurch gekennzeichnet, dass** die Höhe der Anschlusskante (43) bzw. die Breite der Anschlusskante (44) senkrecht zu ihrer Längserstreckung zur Aufnahme eines Dichtbandes (7) definiert ist.

6. Bodenaufbau (1) nach einem der vorstehenden Ansprüche, **dadurch gekennzeichnet, dass** ein an den Trägerboden (41) senkrecht anschließender Teilbereich (46) der Rahmenwand (42b) zur Anschlusskante (43) hin u-förmig umgebogen ist.

7. Bodenaufbau (1) nach einem der vorstehenden Ansprüche, **dadurch gekennzeichnet, dass** eine dem Trägerboden (41) abgewandte Oberseite der wenigstens einen Gefällekeil (2, 2a, 2b) zum Ablauf (3) hin mit Gefälle geformt ist.

8. Bodenaufbau (1) nach einem der vorstehenden Ansprüche, **dadurch gekennzeichnet, dass** der wenigstens eine Gefällekeil (2, 2a, 2b) im Bodenrahmen (4) aufgenommen ist.

9. Bodenaufbau (1) nach einem der vorstehenden Ansprüche, **dadurch gekennzeichnet, dass** der Gefällekeil (2) eine Ausnehmung aufweist, in der wenigstens eine Rinne (32, 320) des Ablaufs (3, 320) aufgenommen ist.

10. Bodenaufbau (1) nach einem der vorstehenden Ansprüche, **dadurch gekennzeichnet, dass** zwei Gefällekeile (2a, 2b) in dem Bodenrahmen (4) einliegen, zwischen denen die wenigstens eine Rinne (32,320) des Ablaufs (3, 300) aufgenommen ist.

11. Bodenaufbau (1) nach einem der vorstehenden Ansprüche, **dadurch gekennzeichnet, dass** in der Rinne (32) wenigstens ein Gefällekeil (33) aufgenommen ist, dessen vom Trägerboden (41) abgewandte Oberfläche zu einer Ablaufkammer (36) der Rinne (32) hin geneigt ist.

12. Bodenaufbau (1) nach einem der vorstehenden Ansprüche, **dadurch gekennzeichnet, dass** unterhalb des Trägerbodens (41) eine Aufbauelement (5) mit einer Ausnehmung (51) zur Aufnahme eines Geruchverschlusses (35) des Ablaufstutzens (37) und eines an den Geruchverschluss (35) angeschlossenen Rohrstücks (38) angeordnet ist.

13. Bodenaufbau (1) nach Anspruch 12, **dadurch gekennzeichnet, dass** der Geruchverschluss (35) auf einen Ablaufstutzen (37) aufgesteckt ist, der an einer Unterseite des Trägerbodens (41) stoffschlüssig angebracht ist.

14. Bodenaufbau (1) nach einem der vorstehenden Ansprüche 1 bis 10, **dadurch gekennzeichnet, dass** der Ablauf (300) wenigstens eine Rinne (320) mit zwei zu einer sich in Richtung der Längserstreckung des Ablaufs (300) erstreckende Falte (321) hin geneigten Ablaufflächen (322) aufweist.

15. Bodenaufbau (1) nach einem der Ansprüche 1 bis 7, **dadurch gekennzeichnet, dass** der wenigstens eine Gefällekeil (2, 2a, 2b) unterhalb des Bodenrahmens (4) angeordnet ist.

## Claims

1. Floor assembly (1) of a shower, comprising a drain (3, 300) and a floor frame (4), wherein the floor frame (4) is designed as a tray with a support floor (41) and frame walls (42a, 42b) that are folded upward at the edges, wherein connecting edges (43, 44) of the frame walls (42a, 42b), which are remote from the support floor (41) and surround it circumferentially, are folded over for engaging behind a wall covering adjoining the floor frame (4) at least partially circumferentially or for engaging underneath a floor covering adjoining the floor frame (4) at least partially circumferentially, **characterized in that** the floor assembly comprises at least one slope wedge (2, 2a, 2b) and **in that** the connecting edge (44) of a frame wall (42b) extends outward offset parallel to the support floor (41) for engaging underneath a floor covering adjoining the floor frame (4).

2. Floor assembly (1) according to claim 1, **characterized in that** the side edges of the frame walls (42a, 42b) are joined together by material bonding, in particular by welding, in the corner regions of the floor frame (4).

3. Floor assembly (1) according to claim 1 or 2, **characterized in that** the connecting edge (43) of a frame wall (42a) extends vertically relative to the support floor (41) for engaging behind a wall covering adjoining the floor frame (4).

4. Floor assembly (1) according to claim 3, **characterized in that** the frame wall (42a) is stepped in shape for engaging behind a wall covering adjoining the floor frame (4), wherein the connecting edge (43) is offset outward parallel to a portion (46) of the frame wall (42a) adjoining the support floor (41).

5. Floor assembly (1) according to claim 3 or 4, **characterized in that** the height of the connecting edge (43) or the width of the connecting edge (44) perpendicular to its longitudinal extension is defined to accommodate a sealing strip (7).

6. Floor assembly (1) according to one of the preceding claims, **characterized in that** a portion (46) of the frame wall (42b) adjoining the support floor (41) perpendicularly is bent over in a U-shape toward the connecting edge (43).

7. Floor assembly (1) according to one of the preceding claims, **characterized in that** an upper surface of the at least one slope wedge (2, 2a, 2b) facing away from the support floor (41) is formed with a slope toward the drain (3).

8. Floor assembly (1) according to one of the preceding claims, **characterized in that** the at least one slope wedge (2, 2a, 2b) is accommodated within the floor frame (4).

9. Floor assembly (1) according to one of the preceding claims, **characterized in that** the slope wedge (2) has a recess in which at least one channel (32, 320) of the drain (3, 300) is accommodated.

10. Floor assembly (1) according to one of the preceding claims, **characterized in that** two slope wedges (2a, 2b) are seated in the floor frame (4), between which the at least one channel (32, 320) of the drain (3, 300) is accommodated.

11. Floor assembly (1) according to one of the preceding claims, **characterized in that** the channel (32) accommodates at least one slope wedge (33), the surface of which facing away from the support floor (41) is inclined toward a drain chamber (36) of the channel (32).

12. Floor assembly (1) according to one of the preceding claims, **characterized in that** a structural element (5) is arranged below the support floor (41), said structural element having a recess (51) for accommodating an odor trap (35) of the drain spout (37) and a pipe section (38) connected to the odor trap (35).

13. Floor assembly (1) according to claim 12, **characterized in that** the odor trap (35) is mounted on a drain spout (37), which is attached to a bottom surface of the support floor (41) by material bonding.

14. Floor assembly (1) according to one of the preceding claims 1 through 10, **characterized in that** the drain (300) comprises at least one channel (320) with two drainage surfaces (322) inclined toward a fold (321) extending in the longitudinal direction of the drain (300).

15. Floor assembly (1) according to one of claims 1 through 7, **characterized in that** the at least one slope wedge (2, 2a, 2b) is arranged below the floor frame (4).

## Revendications

1. Structure de receveur (1) d'une douche, comportant un évacuation (3, 300) et un cadre de receveur (4), lequel cadre de receveur (4) est conformé comme un bac avec un fond portant (41) et des parois de bord (42a, 42b) retournées vers le haut sur les bords, dans lequel des bords de raccordement (43, 44) des parois de cadre (42a, 42b) éloignés du fond portant (41) et entourant celui-ci sur tout le tour sont retournés pour saisir par derrière un revêtement mural faisant suite au cadre de receveur (4) sur au moins une partie de la périphérie ou pour saisir par dessous un revêtement de sol faisant suite au cadre de receveur (4) au moins sur une partie de la périphérie, **caractérisée en ce qu'**elle comporte au moins un coin en pente (2, 2a, 2b) et **en ce que** le bord de raccordement (44) d'une paroi de cadre (42b) s'étend vers l'extérieur avec un décalage parallèle par rapport au fond portant (41) pour saisir par dessous un revêtement de sol faisant suite au cadre de receveur (4).

2. Structure de receveur (1) selon la revendication 1, **caractérisée en ce que** des bords latéraux des parois de cadre (42a, 42b) sont assemblés les uns aux autres dans des coins du cadre de receveur (4) par solidarité de matière, en particulier soudés les uns aux autres.

3. Structure de receveur (1) selon la revendication 1 ou 2, **caractérisée en ce que** le bord de raccordement (43) d'une paroi de cadre (42a) s'étend verticalement par rapport au fond portant (41) pour saisir par derrière un revêtement mural faisant suite au cadre de receveur (4).

4. Structure de receveur (1) selon la revendication 3, **caractérisée en ce que** la paroi de cadre (42a) est conformée en gradin pour saisir par derrière un revêtement mural faisant suite au cadre de receveur (4), le bord de raccordement (43) étant décalé vers l'extérieur parallèlement à une zone partielle (46) de la paroi de cadre (42a) faisant suite au fond portant (41).

5. Structure de receveur (1) selon la revendication 3 ou 4, **caractérisée en ce que** la hauteur du bord de raccordement (43) ou la largeur du bord de raccordement (44) est définie perpendiculairement à son étendue longitudinale en vue de la réception d'une bande d'étanchéité (7).

6. Structure de receveur (1) selon l'une des revendications précédentes, **caractérisée en ce qu'**une zone partielle (46) de la paroi de cadre (42b) faisant suite verticalement au fond portant (41) est recourbée en forme de U vers le bord de raccordement (43).

7. Structure de receveur (1) selon l'une des revendications précédentes, **caractérisée en ce qu'**une face supérieure de l'au moins un coin en pente (2, 2a, 2b) tournée à l'opposé du fond portant (41) est conformée avec une pente en direction de l'évacuation (3).

8. Structure de receveur (1) selon l'une des revendications précédentes, **caractérisée en ce que** l'au moins un coin en pente (2, 2a, 2b) est logé dans le cadre de receveur (4).

9. Structure de receveur (1) selon l'une des revendications précédentes, **caractérisée en ce que** le coin en pente (2) comporte un évidement dans lequel au moins une rigole (32, 320) de l'évacuation (3, 300) est logée.

10. Structure de receveur (1) selon l'une des revendications précédentes, **caractérisée en ce que** deux coins en pente (2a, 2b), entre lesquels l'au moins une rigole (32, 320) de l'évacuation (3, 300) est logée, sont inclus dans le cadre de receveur (4).

11. Structure de receveur (1) selon l'une des revendications précédentes, **caractérisée en ce qu'**est logé dans la rigole (32) au moins un coin en pente (33) dont la face supérieure tournée à l'opposé du fond portant (41) est inclinée vers un compartiment d'évacuation (36) de la rigole (32).

12. Structure de receveur (1) selon l'une des revendications précédentes, **caractérisée en ce qu'**est disposé en dessous du fond portant (41) un élément structurel (5) muni d'un évidement (51) destiné à recevoir un siphon (35) du raccord d'évacuation (37) et un tuyau (38) faisant suite au siphon (35).

13. Structure de receveur (1) selon la revendication 12, **caractérisée en ce que** le siphon (35) est emboîté sur un raccord d'évacuation (37) qui est appliqué par solidarité de matière sur une face inférieure du fond portant (41).

14. Structure de receveur (1) selon l'une des revendications 1 à 10, **caractérisée en ce que** l'évacuation (300) comporte au moins une rigole (320) avec deux surfaces d'écoulement (322) inclinées vers un pli (321) qui s'étend dans le sens de la longueur de l'évacuation (300).

15. Structure de receveur (1) selon l'une des revendications 1 à 7, **caractérisée en ce que** l'au moins un coin en pente (2, 2a, 2b) est disposé en dessous du cadre de receveur (4).
